# EUROPEAN PATENT APPLICATION

(11) **EP 1 806 642 A2**
(43) Date of publication of application: **11.07.2007**
(21) Application number: 06077017.9
(22) Date of filing: 14.11.2006
(51) Int. Cl.: G06F 1/16, G06F 3/02

(54) **Retractable sensors for a display apparatus**

(30) Priority: 01.12.2005 KR 20050116557
(71) Applicant: Samsung Electronics Co., Ltd., Suwon-si, Gyeonggi-Do (KR)
(72) Inventor: Choi, Hyun-yong, Chuncheon-si, Gangwon-do (KR)
(74) Representative: Hylarides, Paul Jacques

(57) **Abstract**

A display apparatus including a display panel, a main body casing to support the display panel and having a display opening to expose a display surface of the display panel and having a plurality of sensor mounting openings formed in a front surface thereof, an input unit provided to be movable about the display panel to emit light and supersonic waves, and a plurality of sensor units mounted in each sensor mounting opening of the main body casing to be movable between a sensing position protruding from the plane of the main body casing and a mounting position recessed from the sensing position, and to sense a position of the input unit and to provide position information of the input unit on the display panel, thus a display apparatus capable of improving the outer appearance of the display apparatus can be provided and a structure of a sensor that performs a tablet function can be improved to prevent the display apparatus from being damaged.

## Description

This application claims priority from Korean Patent Application No. 2005-0116557, filed on December 01, 2005, in the Korean Intellectual Property Office, the disclosure of which is incorporated herein by reference.

### BACKGROUND OF THE INVENTION

### Field of the Invention

The present general inventive concept relates to a display apparatus, and more particularly, to a display apparatus in which the structure of a sensor that performs a tablet function is improved.

### Description of the Related Art

A display apparatus is an apparatus which forms images, such as a TV set and a monitor. In order to reduce installation spaces, thin film type display panels, such as liquid crystal displays (LCD) and plasma display panels (PDP), are generally used as the display apparatus.

Recently, display apparatuses having a tablet function for inputting various information items on a screen by an input unit, such as an electronic pen, have been introduced.

The display apparatus having the tablet function is disclosed in Korean Patent Publication No. 10-2003-0065713 and Korean Utility Model Registration No. 20-0301821. The conventional display apparatus having the tablet function usually comprises a touch screen as a display panel to display an image, so that a user can input desired information by applying pressure onto the touch screen using the electronic pen.

However, according to the conventional display apparatus having the tablet function, since not only an image display panel which is provided in a common display apparatus, but also the touch screen which is comparably expensive is mounted in the conventional display apparatus having the tablet function, the price of the display apparatus significantly increases. In the new display apparatus, it is convenient that a sensor should protrude when the sensor senses the input unit and that the sensor should be inserted to have the same height as the plane of a main body when the sensor does not need to sense the input unit, comparing with the sensor that always protrudes.

### SUMMARY OF THE INVENTION

The present general inventive concept provides a display apparatus capable of improving the outer appearance of the display apparatus and preventing the display apparatus from being damaged by introducing an improved structure of a sensor that performs a tablet function.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept can be achieved by providing a display apparatus comprising: a display panel; a main body casing to support the display panel and having a display opening to expose a display surface of the display panel and having a plurality of sensor mounting openings formed in a front surface thereof; an input unit provided to be movable about the display panel to emit light and supersonic waves; and a sensor unit mounted in each sensor mounting opening of the main body casing to be movable between a sensing position protruding from the plane of the main body casing and a mounting position recessed from the sensing position, and to sense a position of the input unit and to provide position information of the input unit on the display panel.

The display apparatus may further comprise a controller to detect the position information of the input unit on the display panel on the basis of the result obtained by the sensor unit sensing the input unit in the sensing position.

The sensor unit may comprise a sensing part to sense the position of the input unit and to move between the sensing position and the mounting position, a unit casing coupled with the main body casing to accommodate the sensing part and guide the movement of the sensing part, and an elastic member interposed between the unit casing and the sensing part to elastically press the sensing part so that the sensing part can protrude to the sensing position.

The display apparatus may further comprise a locking unit coupled with one of the unit casing and the sensing part so that the sensing part can be locked and released at the mounting position by the pressure applied by the sensing part.

The sensing part may comprise a sensor to sense the position of the input unit; a sensor assembly having a sensor shield to cover the sensor, and a sensor housing to accommodate the sensor assembly to guide the movement of the sensor assembly between the sensing position and the mounting position along the main body casing.

The display apparatus may further comprise at least one guiding protrusion formed in one of the sensor housing and the unit casing to protrude outward and extend along the direction of the movement of the sensor assembly so that the movement of the sensor housing can be guided along the unit casing; and at least one guiding protrusion accommodating unit formed in the other of the sensor housing and the unit casing to accommodate the guiding protrusions.

The locking unit may comprise a mini latch having a locking unit supported by the unit casing and rotatable at a predetermined angle by the pressure applied by the sensor housing to lock and release the sensor housing, and a coupler provided in the sensor housing to be engaged with the locking unit.

The display apparatus may further comprises: a locking jaw protrusion protruding from the internal circumference of the unit casing so that the sensor housing may not depart from the sensing position; and a locking jaw provided in the sensor housing to be locked to the locking jaw protrusion.

The foregoing and/or other aspects and utilities of the present general inventive concept can be achieved by providing a display apparatus comprising a display panel, a main body to support the display panel and having a plurality of sensor mounting openings formed in a front surface thereof, and a sensor unit mounted in each sensor mounting opening of the main body to be movable between a sensing position protruding from a plane of the main body casing and a mounting position recessed into the main body, and to sense positioning of an input unit and to provide position information of the input unit with respect to the display panel.

The sensor unit may comprise a casing to be secured into the respective sensor mounting opening, a housing main body to move between the mounting position and the sensing position, a biasing unit to bias the housing main body to the sensing position, and a locking unit to lock and release the housing main body between the mounting position and the sensing position when the housing main body is pressed inward with respect to the display main body.

The locking unit may comprise a coupler connected to a bottom portion of the housing main body, a mini latch connected to a bottom portion of the unit casing, and a locking unit hook to lock to and release from the coupler when the housing main body is pressed.

The biasing unit is a spring.

The sensor unit may further comprise a sensor disposed at the bottom of the casing, and a sensor shield to cover the sensor within the casing.

The casing may comprise a locking jaw protrusion that extends inward from an upper portion of a circumferential periphery thereof to limit the movement of the casing when moving toward the sensing position, and an outer protrusion that extends outward from the upper portion of the circumferential periphery thereof to contain the casing within the display main body.

The locking jaw protrusion may be disposed above the outer protrusion and is level with the external surface of the display main body.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a perspective view of a display apparatus according to an embodiment of the present general inventive concept;
FIG. 2 is an exploded perspective view of the display apparatus in FIG. 1;
FIG. 3 is an exploded perspective view of a tablet sensor in FIG. 1;
FIG. 4 is an enlarged sectional view of the tablet sensor mounted in the display apparatus of FIG. 1;
FIG. 5 is a sectional view taken along the line II-II of FIG. 4;
FIGs. 6A to 6D are sectional views illustrating operating processes of a sensor unit;
FIG. 7 is a control block diagram of the display apparatus to perform a tablet function; and
FIG. 8 is a perspective view illustrating operating processes of the display apparatus.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

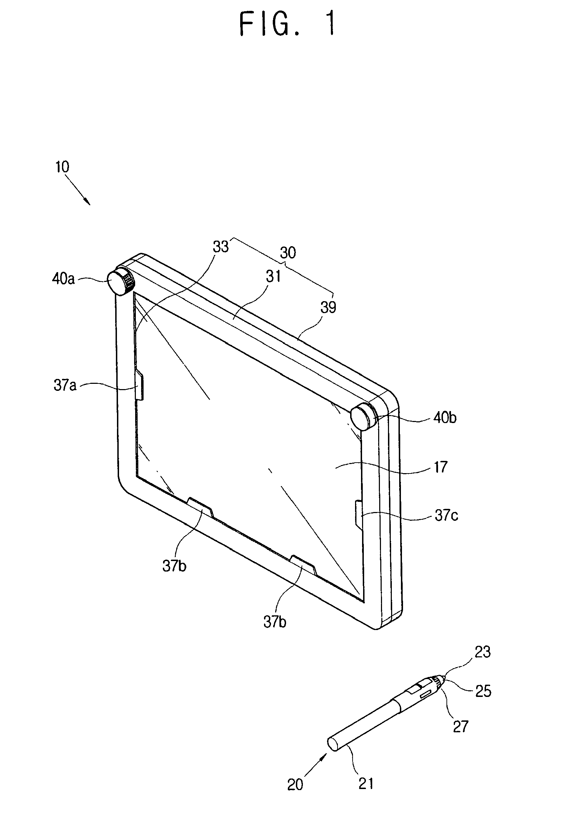

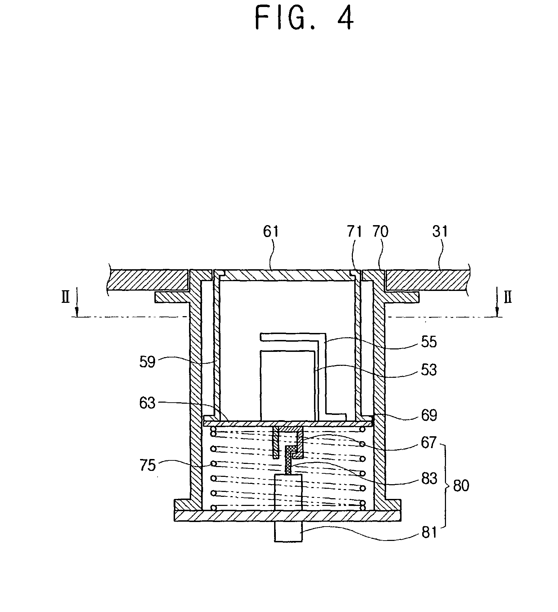

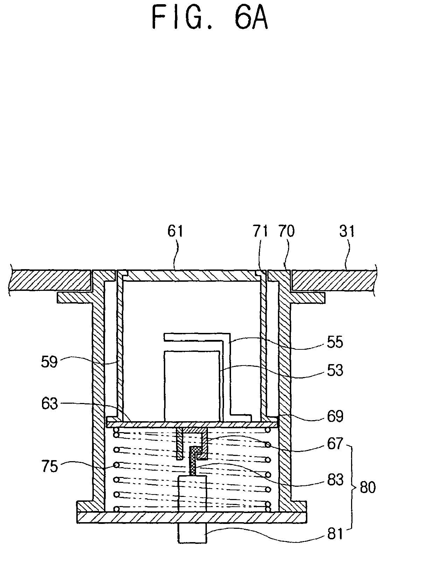

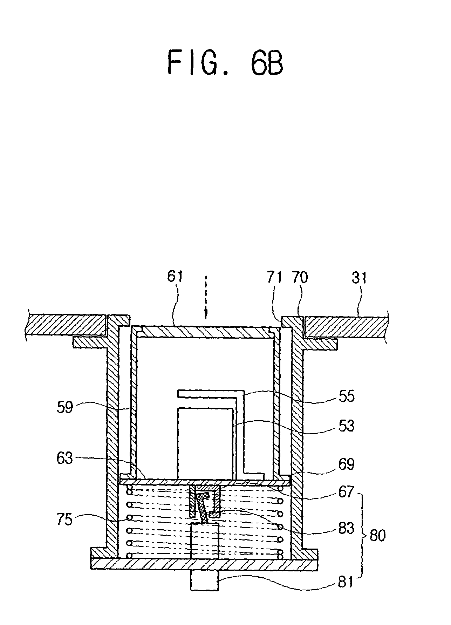

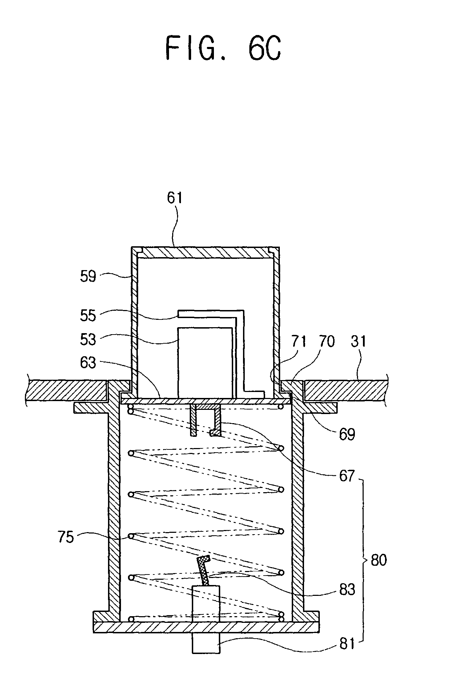

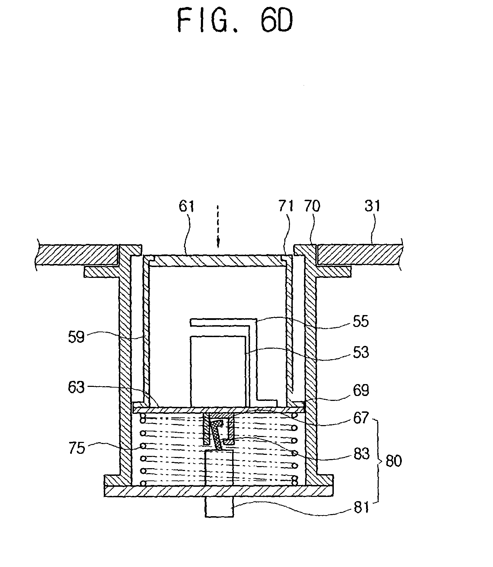

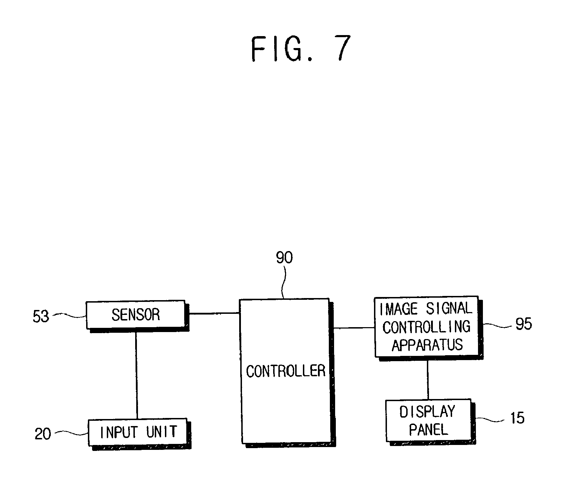

As illustrated in FIGS. 1 to 7, a display apparatus 10 according to an embodiment of the present general inventive concept comprises a display panel 15 on which an image is formed, a main body casing 30 having a display opening 33 to support the display panel 15 to expose the display surface of the display panel 15 and a plurality of sensor mounting openings 35 (i.e., 35a, 35b, etc.) formed on a front surface, an input unit 20 provided on the display panel 15 to be movable and emitting light and supersonic waves, and sensor units 40 (i.e. 40a, 40b, etc.) mounted in the respective sensor mounting opening 35 of the main body casing 30 to be movable between a sensing position (see FIG. 6C) where the sensor unit 40 protrudes from the plane of the main body casing 30 and a mounting position (see FIGS. 4 and 6A) where the sensor unit 40 recedes from the sensing position and senses the input unit 20 to provide position information of the input unit 20 on the display panel 15. The display apparatus 10 further comprises a controller 90 (see FIG. 7) to receive sense signals from the input unit 20 to detect the position information of the input unit 20. The display apparatus 10 further comprises a locking unit 80 coupled with a sensing part 50 so that the sensing part 50 can be locked to or released from the mounting position (FIG. 6C) when a pressure is applied from the sensing part 50 to the locking unit 80. Pressure being applied to the locking unit 80 is illustrated in FIG. 6B, as will be described in more detail with respect to FIGS. 6A through 6C.

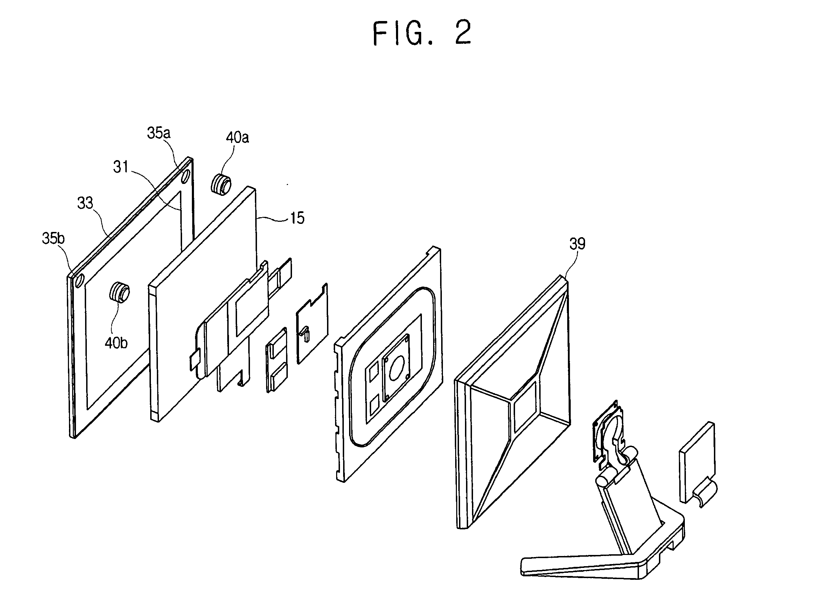

As illustrated in FIG. 2, the display panel 15 can be provided as a thin film type display panel such as a liquid crystal display (LCD) and a plasma display panel (PDP). A driving circuit (not illustrated) to drive the display panel 15 is provided at the back side of the display panel 15. A protection plate 17 (see FIG. 1) to protect the display panel 15 may be attached to the screen of the display panel 15 when the display panel 15 is touched by a pen point 23 of the input unit 20 such as a pen unit to be described later.

As illustrated in FIG. 1, the protection plate 17 can be made of a transparent material, such as vinyl, so that a user can see the image displayed on the display panel 15 through the protection plate 17. The protection plate 17 is supported by protection plate supporters 37 (i.e. 37a, 37b, 37c, etc.) provided in a front cover 31 to be attached and released.

The input unit 20 may be provided as a pen unit illustrated in FIG. 1. The input unit 20 comprises a pen main body 21 having a shape of a pen to be grabbed by the user, a pen point 23 that protrudes at an end of the pen main body 21 to touch the display panel 15, and a light generator 25 and a supersonic wave generator 27 both provided near the pen point 23.

The light generator 25 emits infrared rays and the supersonic wave generator 27 emits supersonic waves so that a sensor 53 to be described later can easily detect the position of the input unit 20.

The protection plate supporters 37 (i.e. 37a, 37b, 37c, etc.) extend from a plane of the front cover 31 toward the center of the display panel 15 by a predetermined width to support the protection plate 17 to be attached and released from the main body casing 30. At least one of the protection plate supporters 37 may be provided at each side of the display opening 33 of the front cover 31. However, the protection plate supporter(s) 37 may not be provided on at least one side of the display opening 33 so that the protection plate 17 can be easily attached and released. Accordingly, when the user uses the tablet function, the protection plate 17 is inserted between the display panel 15 and the protection plate supporters 37 to attach the protection plate 17 to the front surface of the display panel 15. And when the user does not use the tablet function, the protection plate 17 can be easily released from the front surface of the display panel 15.

As illustrated in FIG. 2, the main body casing 30 is provided in front of the display panel 15 and comprises a front cover 31 having the display opening 33 and a rear cover 39 that couples with the front cover 31. The main body casing 30 forms the outer appearance of the display apparatus 10 together with the display panel 15 provided in the display opening 33.

The front cover 31 is provided in front of the display panel 15 and is provided with the display opening 33 to expose the display surface of the display panel 15. The front cover 31 can be coupled with the display panel 15 and the rear cover 39 by screws, etc. Sensor mounting openings 35 are formed through the front cover 31 to accommodate the sensor unit 40.

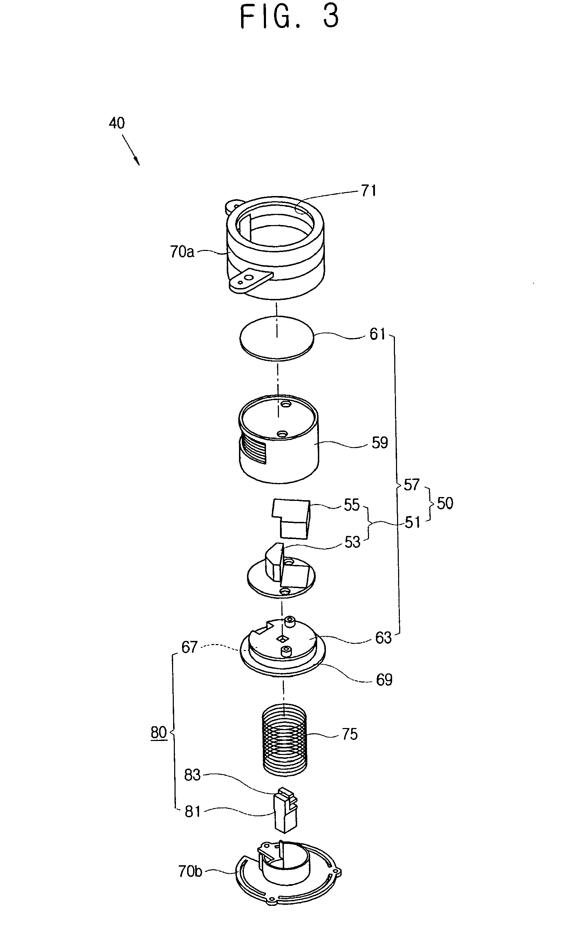

As illustrated in FIGS. 3 and 4, the sensor unit 40 comprises the sensing part 50 that senses the input unit 20 and moves between the sensing position (see FIG. 6C) and the mounting position (see FIGS. 4, 6A and 6B), a unit casing 70 coupled with the main body casing 30 of the display apparatus 10 to accommodate the sensing part 50 and to guide the movement of the sensing part 50, and an elastic member 75 biased against the sensing part 50 to elastically press the sensing part 50 so that the sensing part 50 may protrude to the sensing position.

The sensing part 50 moves between the sensing position (see FIG. 6C) and the mounting position (see FIGS. 4 and 6A) to sense the input unit 20. The sensing part 50 comprises the sensor 53 sensing the input unit 20, a sensor assembly 51 having a sensor shield 55 that covers the sensor 53 so that predetermined electronic waves may not be emitted externally, and the sensor housing 57 that accommodates the sensor assembly 51 and that guides the movement of the sensor assembly 51 between the sensing position and the mounting position. The sensing part 50 is inserted into the main body casing 30 to the mounting position when it does not sense the input unit 20, so that the sensing part 50 does not protrude above the plane of the main body casing 30. Thus, the outer appearance of the display apparatus 10 may be improved and the display apparatus may be prevented from being damaged when the display apparatus 10 is being transported.

The sensor 53 comprises a light sensor (not illustrated) to sense the light emitted from the light generator 25 of the input unit 20 and supersonic wave sensors (not illustrated) to sense the supersonic waves emitted from the supersonic wave generator 27. A single light sensor can be provided. In this embodiment of the present general inventive concept, an infrared ray sensor is used as the light sensor. However, various light sensors other than the infrared ray sensor may also be used. A light sensor driving board (not illustrated) to drive the light sensor is mounted on the light sensor and the light sensor driving board may be supported by the sensor housing 57. The supersonic wave sensors sense the supersonic waves emitted from the supersonic wave generator 27 of the input unit 20 and may be provided in plurality to measure the difference in distances between the input unit 20 and the supersonic wave sensors using the difference in their sensing time. That is, the supersonic wave sensors are accommodated in the sensor housings 57 provided at the left upper and right upper sides of the front cover 31. Supersonic wave sensor driving boards (not illustrated) to drive the supersonic wave sensors are mounted on the supersonic wave sensors.

The sensor housing 57 accommodates the sensor assembly 51 to guide the movement of the sensor assembly 51 between the sensing position (see FIG. 6C) and the mounting position (see FIGS. 4, 6A-6B and 6D). The sensor housing 57 comprises a housing main body 59, a housing upper cover 61 provided at one side of the housing main body 59 and made of a material having decent outer appearance such as acryl to be coupled with the housing main body 59 so that the user can apply pressure thereon, and a housing lower cover 63 provided at the other side of the housing main body 59 to be coupled with the housing main body 59 to support the sensor assembly 51.

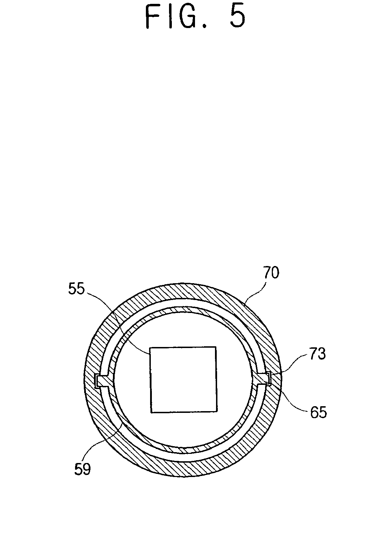

As illustrated in FIG. 5, at least one guiding protrusion 65 protrudes from the outer circumference of the sensor housing 57 and extends along the direction of the movement. Thus, the guiding protrusion(s) 65 can smoothly move between the sensing position and the mounting position as they are accommodated within guiding protrusion accommodating units 73. The guiding protrusions 65 may not be provided in accordance with, for example, the length of the sensor housing 57.

As illustrated in FIG. 4, a coupler 67 protrudes from the plane of the housing lower cover 63 to be engaged with a locking unit hook 83 of a mini latch 81 to be described later to lock or release the sensor housing 57.

A locking jaw 69 protrudes from the outer circumference of the sensor housing 57 and is limited in movement in the direction toward the sensing position by a locking jaw protrusion 71 of a unit casing 70 so that the sensor housing 57 may not depart from the sensing position(see FIG. 6C).

As illustrated in FIG. 4, the unit casing 70 is coupled with the main body casing 30 at the front cover 31 to accommodate the sensing part 50 and guide the movement of the sensing part 50. The unit casing 70 has the guiding protrusion accommodating units 73 recessed in the internal surface thereof to be engaged with the guiding protrusions 65 mentioned above, and thus guides the movement of the sensor housing 57 (see FIGS. 4 and 5). The unit casing 70 has the locking jaw protrusion 71 that protrudes from the internal surface of the unit casing 70 to be engaged with the locking jaw 69 of the sensor housing 57 so that the sensor housing 57 may not depart from the sensing position.

The elastic member 75 is interposed between the unit casing 70 and the sensor housing 57 to elastically press the sensor housing 57 so that the sensor housing 57 may protrude to the mounting position. The elastic member 75 can be a compression spring that elastically presses the sensor housing 57 to the sensing position.

Therefore, the sensor housing 57 can stably move in the unit casing 70.

As illustrated in FIG. 4, a locking unit 80 is coupled with the unit casing 70 to lock or release the sensor housing 57 to or from the mounting position by the pressure applied by the unit casing 70. The locking unit 80 comprises the mini latch 81 having the locking unit hook 83 of the shape of a hook supported by the unit casing 70 and rotated by the pressure applied by the sensor housing 57 to a predetermined angle to lock or release the sensor housing 57, and the coupler 67 formed in the sensor housing 57 to be engaged with the locking unit 83.

The mini latch 81 comprises a main body (not illustrated) and the locking unit hook 83 at an end of the main body. The main body is configured such that the locking unit 83 rotates to the predetermined angle as well as it ascends or descends when the locking unit 83 is pressed by predetermined force. The mini latch 81 may be selected from conventional ones which have the same function as that of the locking unit hook 83.

Therefore, the sensor housing 57 can be stably locked and released.

As illustrated in FIG. 7, the controller 90 can calculate the distance between the input unit 20 and the unit casing 70 by the light sensor and one of the supersonic wave sensors on the basis of the result obtained by the sensor unit 40 that senses the input unit 20 at its sensing position. Also, the controller 90 can calculate a relative distance ratio from the distances between the input unit 20 and the unit casings 70 by the supersonic wave sensors provided in both unit casings 70. Further, the controller 90 can calculate a two-dimensional position information of the input unit 20 on the display panel 15 on the basis of the calculated relative distance ratio and the fixed distance between the unit casings 70. The controller 90 may be built in the display apparatus 10 according to this embodiment of the present general inventive concept. However, the controller 90 may be provided in an image signal controlling apparatus 95 such as a computer main body that provides image signals to the display apparatus 10.

As illustrated in FIG. 7, the image signal controlling apparatus 95 receives the position information of the input unit 20 detected by the controller 90 and controls the image signal of the display panel 15 to display the movement of the input unit 20 on the display panel 15.

The display apparatus 10 according to the present general inventive concept may or may not include the image signal controlling apparatus 95. The image signal controlling apparatus 95 contains programs such as a document creating program, a painting program, etc., and transmits the position information of the input unit 20 to the programs so that the position information of the input unit 20 can be displayed on the display panel 15.

The operating processes of the display apparatus according to the present general inventive concept will be described as follows with reference to FIGS. 6A to 8.

Firstly, when the sensor housing 57, which is locked at the mounting position as illustrated in FIG. 6A, is pressed as illustrated in FIG. 6B, the locking unit 83 of the mini latch 81 descends and is rotated at the same time to be released from the coupler 67 of the sensor housing 57. Then, when the pressure applied to the sensor housing 57 is released, as illustrated in FIG. 6C, the sensor housing 57 moves to the sensing position while being guided by the guiding protrusion accommodating units 73 of the unit casing 70 by the elastic member 75, thus protruding from the main body casing 30. As illustrated in FIG. 6D, the operating processes of inserting the sensor housing 57 to the mounting position (see FIG. 6A) are opposite to the operating processes of protruding the sensor housing 57 to the sensing position (FIG. 6C).

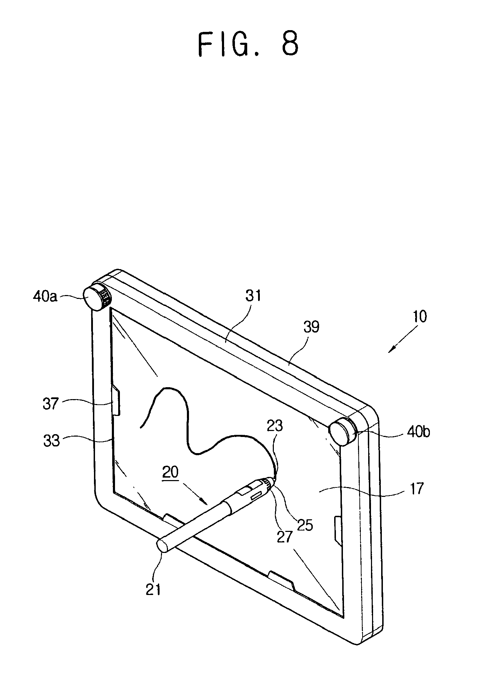

Then, as illustrated in FIGS. 7 and 8, in a state where the protection plate 17 is attached to the front surface of the display panel 15, the user creates predetermined information on the protection plate 17 by the input unit 20. At this time, light and supersonic waves are generated by the light generator 25 and the supersonic wave generator 27 of the input unit 20 and sensed by the light sensor and the supersonic sensors respectively. The sensed signals are transmitted to the controller 90 and the controller 90 calculates the position information of the input unit 20. The position information calculated by the controller 90 is transmitted to the image signal controlling apparatus 95 to be displayed on the display panel 15. When inputting information by the input unit 20 is finished, the user presses the sensor housing 57 as described above, then the coupler 67 is engaged with the locking unit 83 of the mini latch 81 to lock the sensor unit 40.

According to the display apparatus of the present general inventive concept, as the sensor that performs the tablet function is movable, it is possible to improve the outer appearance of the display apparatus and to prevent the display apparatus from being easily damaged while it is carried.

As described above, according to the present general inventive concept, it is possible to provide a display apparatus which has an improved outer appearance and is prevented from being easily damaged.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A display apparatus comprising:
a display panel;
a main body casing to support the display panel and having a display opening to expose a display surface of the display panel and having a plurality of sensor mounting openings formed in a front surface thereof;
an input unit provided to be movable about the display panel to emit light and supersonic waves; and
a sensor unit mounted in each sensor mounting opening of the main body casing to be movable between a sensing position protruding from the plane of the main body casing and a mounting position recessed from the sensing position, and to sense a position of the input unit and to provide position information of the input unit on the display panel.

2. The display apparatus according to claim 1, further comprising:
a controller to detect the position information of the input unit on the display panel on the basis of the result obtained by the sensor unit sensing the input unit in the sensing position.

3. The display apparatus according to claim 1, wherein the sensor unit comprises:
a sensing part to sense the position of the input unit and to move between the sensing position and the mounting position;
a unit casing coupled with the main body casing to accommodate the sensing part and guide the movement of the sensing part; and
an elastic member interposed between the unit casing and the sensing part to elastically press the sensing part so that the sensing part can protrude to the sensing position.

4. The display apparatus according to claim 3, further comprising:
a locking unit coupled with one of the unit casing and the sensing part so that the sensing part can be locked and released at the mounting position by the pressure applied by the sensing part.

5. The display apparatus according to claim 4, wherein the sensing part comprises:
a sensor to sense the position of the input unit;
a sensor assembly having a sensor shield to cover the sensor; and
a sensor housing accommodating the sensor assembly to guide the movement of the sensor assembly between the sensing position and the mounting position along the main body casing.

6. The display apparatus according to claim 5, further comprising:
at least one guiding protrusion formed in one of the sensor housing and the unit casing to protrude outward and extend along the direction of the movement of the sensor assembly so that the movement of the sensor housing can be guided along the unit casing; and
at least one guiding protrusion accommodating unit formed in the other of the sensor housing and the unit casing to accommodate with the guiding protrusions.

7. The display apparatus according to claim 5, wherein the locking unit comprises:
a mini latch having a locking unit supported by the unit casing and rotatable at a predetermined angle by the pressure applied by the sensor housing to lock and release the sensor housing; and
a coupler provided in the sensor housing to be engaged with the locking unit.

8. The display apparatus according to claim 5, further comprising:
a locking jaw protrusion protruding from the internal circumference of the unit casing so that the sensor housing may not depart from the sensing position; and
a locking jaw provided in the sensor housing to be locked to the locking jaw protrusion.

9. A display apparatus comprising:
a display panel;
a main body to support the display panel and having a plurality of sensor mounting openings formed in a front surface thereof; and
a sensor unit mounted in each sensor mounting opening of the main body to be movable between a sensing position protruding from a plane of the main body casing and a mounting position recessed into the main body, and to sense positioning of an input unit and to provide position information of the input unit with respect to the display panel.

10. The display apparatus according to claim 9, wherein the sensor unit comprises:
a casing to be secured into the respective sensor mounting opening;
a housing main body to move between the mounting position and the sensing position;
a biasing unit to bias the housing main body to the sensing position; and
a locking unit to lock and release the housing main body between the mounting position and the sensing position when the housing main body is pressed inward with respect to the display main body.

11. The display apparatus according to claim 10, wherein the locking unit comprises:
a coupler connected to a bottom portion of the housing main body;
a mini latch connected to a bottom portion of the unit casing; and
a locking unit hook to lock to and release from the coupler when the housing main body is pressed.

12. The display apparatus according to claim 10, wherein the biasing unit is a spring.

13. The display apparatus according to claim 10, wherein the sensor unit further comprises:
a sensor disposed at the bottom of the casing; and
a sensor shield to cover the sensor within the casing.

14. The display apparatus according to claim 10, wherein the casing comprises:
a locking jaw protrusion that extends inward from an upper portion of a circumferential periphery thereof to limit the movement of the casing when moving toward the sensing position; and
an outer protrusion that extends outward from the upper portion of the circumferential periphery thereof to contain the casing within the display main body.

15. The display apparatus of claim 14, wherein the locking jaw protrusion is disposed above the outer protrusion and is level with the external surface of the display main body.
